# EUROPÄISCHE PATENTSCHRIFT

(11) **EP 1 424 017 B1**
(45) Veröffentlichungstag und Bekanntmachung des Hinweises auf die Patenterteilung: **31.03.2010**
(21) Anmeldenummer: 03450008.2
(22) Anmeldetag: 10.01.2003
(51) Int. Cl.: A41G 5/00

(54) **Applikator für Ersatzhaarsträhnen**
Hair strand applicator
Applicateur de mèches de cheveux

(30) Priorität: 29.11.2002 AT 17052002; 23.12.2002 AT 19282002
(43) Veröffentlichungstag der Anmeldung: 02.06.2004
(73) Patentinhaber: Bege Privatstiftung, 1010 Wien (AT)
(72) Erfinder: Ott, Gerhard, 8020 Graz (AT)
(74) Vertreter: Patentanwälte Barger, Piso & Partner

(56) Entgegenhaltungen:
- EP-A- 1 186 249
- FR-A- 2 729 940
- US-A- 3 184 354
- US-A- 4 377 427

## Beschreibung

Die Erfindung bezieht sich auf einen Applikator für Ersatzhaarsträhnen, deren Haare mit einem Ende in einem U-förmigen thermoplastischen Element eingebettet sind.

Ersatzhaarsträhnen werden herkömmlicherweise durch ein thermoplastisches Element in U- oder V-Form zusammengehalten, wobei bei der U-Form der die Schenkel verbindende Steg gerade oder gebogen sein kann. Bei der Applikation am menschlichen Kopf wird eine Eigenhaarsträhne zwischen die Schenkel der U- oder V-Form gelegt, und dann erfolgt eine Erwärmung des Elementes mit Ultraschall oder mit einer Heizpinzette, bis der thermoplastische Kunststoff erweicht bzw schmilzt. Zur Vollendung dieser Schmelzklebung wird üblicherweise der Klebebereich zu Beginn des Erkaltens noch zwischen den Fingern gerollt oder gefaltet, um eine gute Einbettung der Eigen- und Ersatzhaare im Kleber zu erzielen. Diese Methode ist aber von der Fingerfertigkeit des Friseurs sehr abhängig - oft kommt es vor, dass die Schmelzklebung unvollständig ist, sodass sich die Ersatzhaarsträhne etwa nach einigen Malen des Kämmens von den Eigenhaaren löst.

Ziel der Erfindung ist daher ein Applikator, der eine sichere Verbindung von Fremd- mit Eigenhaaren gewährleistet, ohne dass es auf besondere Kunstfertigkeit der die Fremdhaare anbringenden Fachkraft ankommt.

Dieses Ziel wird erfindungsgemäß mit einem Applikator erreicht, der gekennzeichnet ist durch eine Matrize mit einer Ausnehmung zur Aufnahme des U-förmigen Elementes sowie durch einen bis in die Ausnehmung der Matrize beweglich geführten Stempel.

Das Stempel Matrizen-Prinzip ist durch die EP-A-1 186 247 in Zusammenhang mit einer Vorrichtung zur Herstellung von Ersatzhaarsträhnen bekannt geworden.

Durch den aus Stempel und Matrize bestehenden Applikator wird das U-förmige Element letztlich so deformiert, dass es die Form eines kompakten länglichen Körpers annimmt, in dem sowohl die Ersatzhaare als auch die Eigenhaare zur Gänze mit ihren Enden eingebettet sind. Im Zuge des Einlegens der Eigenhaarenden in das U-förmige Element wird der Applikator darübergestülpt, sodass das U-förmige Element in der Ausnehmung der Matrize zu liegen kommt. Danach wird der Stempel in die Matrize gedrückt, wodurch es (mit oder ohne Erhitzung) zu einer plastischen Deformation des Elementes und zu einer Kompaktierung kommt Dabei kommt es selbstverständlich nur auf die Relativbewegung zwischen Stempel und Matrize an, dh in gleicher Weise kann die Matrize gegen den Stempel gedrückt werden.

Die Ausnehmung und der Stempel weisen unterschiedliche Profile auf und der Stempel definiert bei vollständiger Einführung in die Ausnehmung einen freibleibenden, im wesentlichen prismatischen Raum. Nach der Applikation der Fremdhaarsträhne an einer Eigenhaarsträhne weist dann die thermoplastische Verbindung im wesentlichen eine prismatische Form auf.

Falls das Profil des Stempels und des Grundes der Ausnehmung gerade bzw. eben ist, ergibt sich für die thermoplastische Verbindung eine Rechtecksprismenform; bei gekrümmten Profilen dagegen eine zylindrische Form mit Kreis- oder Ovalquerschnitt. Die Profile des Stempels und des Grundes der Ausnehmung können auch unterschiedlich sein, zB einerseits eben, anderseits gekrümmt uam. Es hat sich gelegentlich auch als günstig erwiesen, eines der Profile oder beide Profile gewellt oder gezackt zu gestalten. Ausschlaggebend für die Profilwahl ist in erster Linie das gewünschte (letztlich für einen außenstehenden Betrachter nicht wahrnehmbare) Aussehen der Verbindung angesichts der gewünschten Frisur.

Es hat sich als vorteilhaft erwiesen, wenn die Ausnehmung und der Stempel im wesentlichen spiegelgleiche Profile aufweisen, die sowohl in Bewegungsrichtung des Stempels als auch quer dazu eine Konkavwölbung aufweisen. Die thermoplastische Verbindung zwischen den Fremd- und Eigenhaaren weist dann im wesentlichen die Form eines bauchigen Zylinders mit Kreis- oder Ovalquerschnitt auf. Diese Form bedingt, dass das ursprünglich U-förmige Element an seinen Enden mehr abgeschnürt und deformiert wird als in seiner Mitte, wodurch es beim Schmelzkleb- und Pressvorgang zu einer intensiveren Umhüllung der Haare durch das Thermoplast kommt, als dies bei einer im wesentlichen prismatischen bzw. zylindrischen Schmelzklebverbindung der Fall ist. Dabei hat es sich als günstig erwiesen, wenn die quer zur Bewegungsrichtung des Stempels verlaufende Konkavwölbung an ihren Rändern im wesentlichen senkrecht auf die Bewegungsrichtung des Stempels verlaufende Abschnitte aufweist. Durch diese Profilgebung umhüllt die fertige Klebung die Fremd- bzw. Eigenhaare an ihren Enden in deren Längsrichtung und weist in der Mitte eine bauchige Verdickung auf. Diese Verbindungsform ist daher selbst bei aufmerksamer Betrachtung kaum wahrzunehmen, wenn - wie üblich - ein durchsichtiges Thermoplast verwendet wird.

Eine besonders einfache und daher vorteilhafte Ausführungsform des Applikators besteht darin, dass die Matrize im wesentlichen die Form eines aus einem langen und einem kurzen Schenkel bestehenden Hakens aufweist, wobei sich die Ausnehmung im kurzen Schenkel befindet, und dass der Stempel längs der dem kurzen Schenkel zugewandten Seite des langen Schenkels geführt ist.

Schließlich ist es zweckmäßig, wenn Stempel und Matrize in eine Betätigungs- und Heizeinrichtung einsetzbar sind, damit herkömmliche, einschlägige (Universal) Werkzeuge zur Anwendung gelangen können.

Um eine weitgehend automatisierte und somit rasche Applikation von Ersatzhaarsträhnen am menschlichen Kopf zu gewährleisten, ist es von Vorteil, wenn die Ausnehmung der Matrize von einem quer zur Bewegungsrichtung des Stempels verlaufenden Kanal durchsetzt ist, in den ein Magazin einschiebbar ist, welches nebeneinander mehrere, der Form der Ausnehmung entsprechende Aufnahmespeicher für Ersatzhaarsträhnen aufweist.

Bei dieser Ausführungsform kann das Magazin mit mehreren Ersatzhaarsträhnen gefüllt werden, indem diese mit ihren U-förmigen Elementen in die Aufnahmespeicher gesteckt werden. Durch sukzessives Vorschieben des Magazins gelangt dann jeder Aufnahmespeicher in eine mit der Ausnehmung der Matrize fluchtende Stellung, in der bei Einführung des Stempels die Verbindung der jeweiligen Ersatzhaarsträhne mit dem zuvor eingelegten Eigenhaar erfolgt. Der jeweilige Aufnahmespeicher übernimmt dann gleichsam ganz oder teilweise die Funktion der Ausnehmung, dh die plastische Deformation des U-förmigen thermoplastischen Elementes findet ganz oder teilweise direkt im Aufnahmespeicher statt. Es ist daher im Einklang mit der Erfindung zweckmäßig, wenn die Betätigungs- und Heizeinrichtung eine Schrittvorschubeinrichtung für das Magazin aufweist.

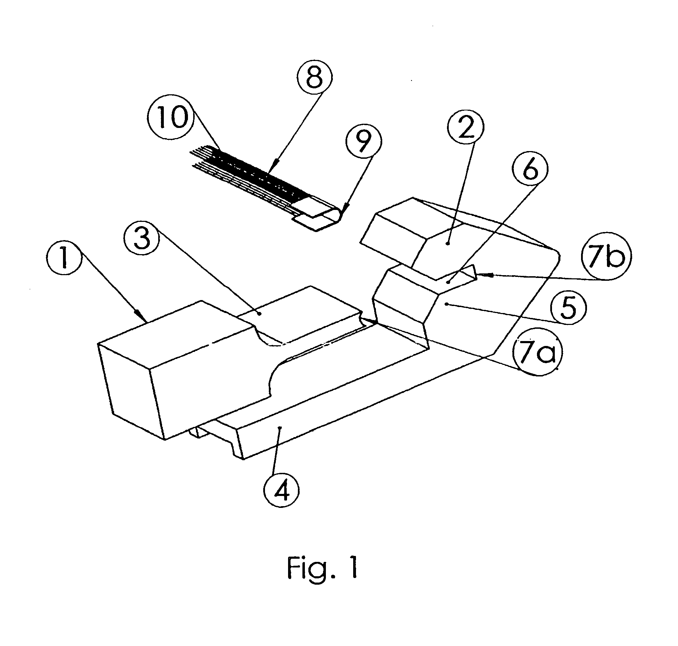

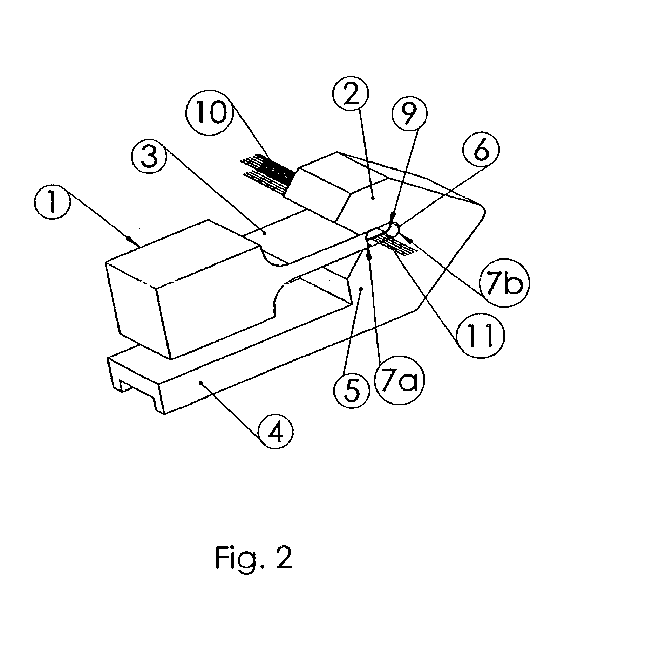

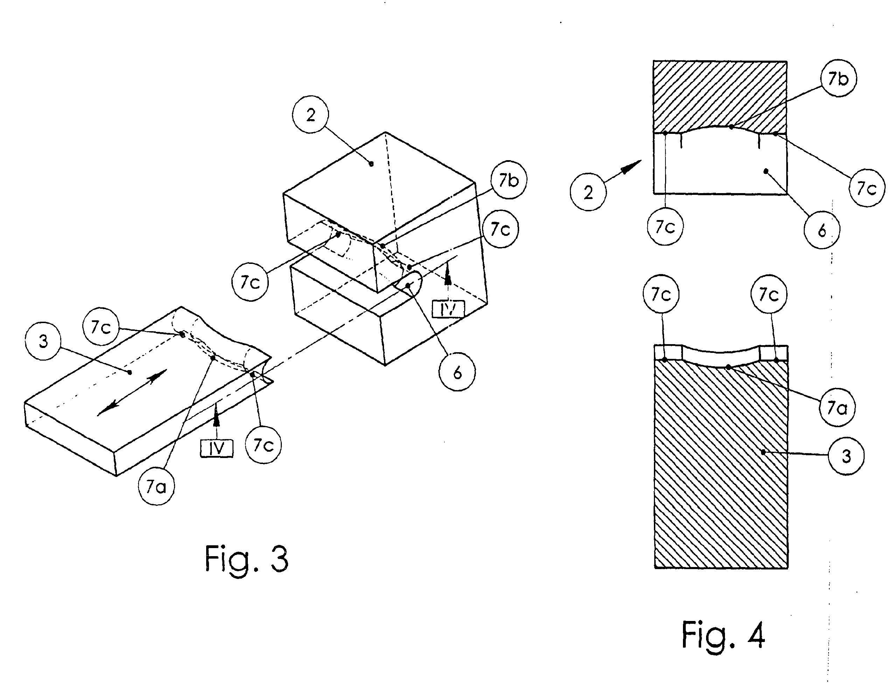

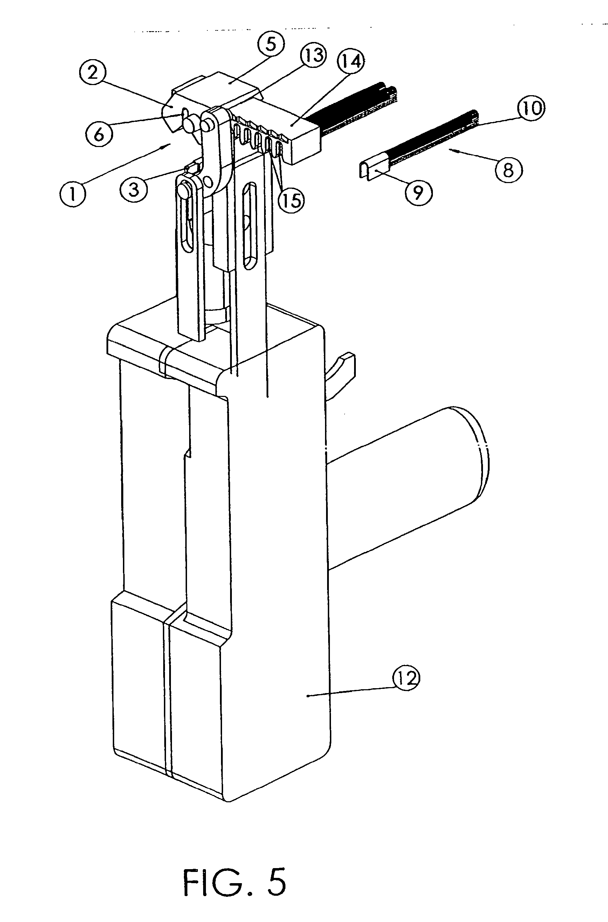

Die Erfindung wird im Folgenden anhand eines in der Zeichnung veranschaulichten Ausführungsbeispieles näher erläutert. Es zeigen Fig 1 in schematischer Schrägansicht den erfindungsgemäßen Applikator in Offenstellung, Fig 2 denselben Applikator vor der Schließstellung, Fig. 3 einen Ausschnitt aus Fig. 1 mit einer Abwandlungsform der Erfindung, Fig. 4 einen Schnitt längs der Linie IV-IV der Fig. 3, Fig. 5 in schematischer Schrägansicht eine weitere Ausführungsform des erfindungsgemäßen Applikators samt einer Betätigungs- und Heizeinrichtung.

Der erfindungsgemäße Applikator 1 (Fig. 1, 2) besteht aus einer Matrize 2 und einem Stempel 3. Die Matrize weist im wesentlichen die Form eines aus einem langen Schenkel 4 und einem kurzen Schenkel 5 bestehenden Hakens auf. Im kurzen Schenkel 5 befindet sich eine nutenförmige Ausnehmung 6. Der Stempel 3 ist längs der dem kurzen Schenkel 5 zugewandten Seite des langen Schenkels 4 geführt. Der Stempel 3 und der Grund der nutenförmigen Ausnehmung 6 können mit beliebigen Profilen 7a, 7b versehen sein. Im dargestellten Fall der Fig. 1 ist das Profil 7a des Stempels 3 gekrümmt; wogegen das Profil 7b des Grundes der Ausnehmung 6 eben ist; in Fig. 2 sind dagegen beide Profile 7a, 7b gekrümmt.

Eine Ersatzhaarsträhne 8 weist ein U-förmiges thermoplastisches Element 9 auf, in dem die Fremdhaare 10 mit einem ihrer Enden eingebettet sind. Die U-Form ist dabei mit gekrümmtem, die beiden Schenkel verbindenden Steg dargestellt; es ist aber auch ein gerader Steg möglich. Zur Anbringung der Ersatzhaarsträhne 8 an einer Eigenhaarsträhne 11 werden die Enden der Eigenhaarsträhne 11 in das U-förmige Element 9 eingelegt, worauf die Matrize 2 mit ihrer Ausnehmung 6 über das Element 9 gestülpt wird und der Stempel 3 in die Ausnehmung 6 der Matrize eingeschoben wird. Mit oder ohne Erhitzung des Applikators kommt es dabei zu einer plastischen Verformung des Elementes 9, wodurch eine Schmelzklebung der Fremdhaare 10 mit den Eigenhaaren 11 erfolgt. Der aus Stempel 3 und Matrize 2 bestehende Applikator kann in zweckmäßiger Weise in eine entsprechende Betätigungs- und Heizeinrichtung 12 (Fig. 5) eingesetzt werden.

Bei der in Fig. 3 und 4 veranschaulichten Ausführungsform der Erfindung weisen die Ausnehmung 6 der Matrize 2 und der Stempel 3 im wesentlichen spiegelgleiche Profile 7a bzw. 7b auf, die sowohl in Bewegungsrichtung des Stempels (siehe Pfeil) bzw. in Richtung der Relativbewegung von Stempel 3 und Matrize 2 als auch quer dazu konkav gewölbt sind. Die quer verlaufende Konkavwölbung geht dabei an ihren seitlichen Rändern in etwa senkrecht auf die Bewegungsrichtung stehende Abschnitte 7e über Die nach dem Press-Schmelzvorgang fertige Verbindung zwischen den Fremdhaaren 10 (Fig. 1, 2) und Eigenhaaren 11 (Fig. 2) weist dann etwa die Form eines bauchigen Zylinders auf, die sich sowohl hinsichtlich des Aussehens als auch der Güte der Schmelzklebung besonders bewährt hat.

Bei der in Fig. 5 veranschaulichten, in eine Betätigungs- und Heizeinrichtung 12 eingesetzten Ausführungsform des Applikators 1 ist die Ausnehmung 6 der Matrize 2 von einem quer zur Bewegungsrichtung des Stempels 3 verlaufenden Kanal 13 durchsetzt. In diesen Kanal 13 ist ein Magazin 14 einschiebbar, welches nebeneinander mehrere (z.B. zehn), der Form der Ausnehmung 6 entsprechende Aufnahmespeicher 15 aufweist. In diese Aufnahmespeicher 15 werden die Ersatzhaarsträhnen 8 mit ihren U-Förmigen Elementen 9 eingesetzt. Die Betätigungs- und Heizeinrichtung 12 kann mit einer (nicht dargestellten) Schrittvorschubeinrichtung versehen sein.

Bei Verwendung des Applikators gemäß Fig. 3 wird zunächst das Magazin 14 mit Fremdhaarsträhnen 8 bestückt und danach in den Kanal 13 eingesetzt. Durch sukzessives Vorschieben des Magazins gelangen die Aufnahmespeicher 15 mit den eingelegten Elementen 9 in die Ausnehmung 6 und übernehmen gleichsam ganz oder teilweise deren Funktion. In dieser Stellung wird eine Eigenhaarsträhne in das offene U des Elementes 9 eingelegt und sodann der Stempel 3 oder die Matrize 2 betätigt, sodass diese durch Relativbewegung gegeneinander bewegt werden und es zur Schmelzklebung zwischen Fremd- und Eigenhaaren kommt. Nach Herausnahme der thermoplastischen, prismen- oder zylinderförmigen Verbindung aus der Ausnehmung 6 der Matrize 2 bzw dem jeweiligen Aufnahmespeicher 15 des Magazins 14 wird das Magazin 14 um einen Aufnahmespeicher 15 vorgeschoben, worauf die nächste Schmelzklebung erfolgen kann.

## Patentansprüche

1. Applikator (1) für Ersatzhaarsträhnen (8), deren Haare (10) mit einem Ende in einem U-förmigen thermoplastischen Element (9) eingebettet sind, mit einer Matrize (2) mit einer Ausnehmung (6) zur Aufnahme des U-förmigen Elementes (9) einem bis in die Ausnehmung (6) der Matrize (2) beweglich geführten Stempel (3), **dadurch gekenzeichnet dass** die Ausnehmung (6) und der Stempel (3) unterschiedliche Profile (7a 7b) aufweisen und der Stempel (3) bei vollständiger Einführung in die Ausnehmung (6) einen freibleibenden, im wesentlichen prismatischen Raum definiert.

2. Applikator nach Anspruch 1, **dadurch gekennzeichnet, dass** die Ausnehmung (6) und der Stempel (3) im wesentlichen spiegelgleiche Profile (7a, 7b) aufweisen, die sowohl in Bewegungsrichtung des Stempels (3) als auch quer dazu eine Konkavwölbung aufweisen.

3. Applikator nach Anspruch 2, **dadurch gekennzeichnet, dass** die quer zur Bewegungsrichtung des Stempels (3) verlaufende Konkavwölbung an ihren Rändern im wesentlichen senkrecht auf die Bewegungsrichtung des Stempels verlaufende Abschnitte (7c) aufweist.

4. Applikator nach einem der Ansprüche 1 bis 3, **dadurch gekennzeichnet, dass** die Matrize (2) im wesentlichen die Form eines aus einem langen (4) und einem kurzen Schenkel (5) bestehenden Hakens aufweist, wobei sich die Ausnehmung (6) im kurzen Schenkel (5) befindet, und dass der Stempel (3) längs der den kurzen Schenkel (5) zugewandten Seite des langen Schenkels (4) geführt ist.

5. Applikator nach einem der Ansprüche 1 bis 4, **dadurch gekennzeichnet, dass** Stempel (3) und Matrize (2) in eine Betätigungs- und Heizeinrichtung (12) einsetzbar sind.

6. Applikator nach einem der Ansprüche 1 bis 5, **dadurch gekennzeichnet, dass** die Ausnehmung (6) der Matrize (2) von einem quer zur Bewegungsrichtung des Stempels (3) verlaufenden Kanal (13) durchsetzt ist, in den ein Magazin (14) einschiebbar ist, welches nebeneinander mehrere, der Form der Ausnehmung (6) entsprechende Aufnahmespeicher (15) für Ersatzhaarsträhnen (8) aufweist.

7. Applikator nach Anspruch 5 und 6, **dadurch gekennzeichnet, dass** die Betätigungs- und Heizeinrichtung (12) eine Schrittvorschubeinrichtung für das Magazin (14) aufweist.

## Claims

1. Applicator (1) for replacement hair strands (8), the hairs (10) of which are embedded at one end in a U-shaped thermoplastic member (9), the applicator comprising a female part (2) having a recess (6) for receiving the U-shaped member (9) and a male part (3) which is movably guided into the recess (6) of the female part (2), **characterised in that** the recess (6) and the male part (3) have different profiles (7a, 7b) and the male part (3) defines an open, substantially prismatic space once completely inserted into the recess (6).

2. Applicator according to claim 1, **characterised in that** the recess (6) and the male part (3) have mirroring profiles (7a, 7b) which are concave both in the direction of movement of the male part (3) and transverse thereto.

3. Applicator according to claim 2, **characterised in that** the concave curve extending transverse to the direction of movement of the male part (3) has portions (7c) at its edges, said portions extending substantially perpendicular to the direction of movement of the male part.

4. Applicator according to any one of claims 1 to 3, **characterised in that** the female part (2) is basically shaped as a hook consisting of a long (4) and a short branch (5), the recess (6) being arranged in the short branch (5), and **in that** the male part (3) is guided along the side of the long branch (4) facing the short branch (5).

5. Applicator according to any one of claims 1 to 4, **characterised in that** the male part (3) and the female part (2) can be inserted into an actuation and heating means (12).

6. Applicator according to any one of claims 1 to 5, **characterised in that** the recess (6) of the female part (2) is penetrated by a channel (13) extending transverse to the direction of movement of the male part (3), into which channel a magazine (14) may be inserted which has a plurality of sockets (15), arranged side-by-side and shaped similarly to the recess (6), for replacement hair strands (8).

7. Applicator according to claims 5 and 6, **characterised in that** the actuation and heating means (12) has a step feed means for the magazine (14).

## Revendications

1. Applicateur (1) pour rajouts de cheveux (8), dont les cheveux (10) sont encastrés par une extrémité dans un élément thermoplastique en forme de U (9), comportant une matrice (2) présentant un évidement (6) destiné à recevoir l'élément en forme de U (9), un poinçon (3) guidé de façon mobile dans l'évidement (6) de la matrice (2), **caractérisé en ce que** l'évidement (6) et le poinçon (3) présentent des profils différents (7a, 7b) et **en ce que** le poinçon (3), une fois entièrement introduit dans l'évidement (6), définit un espace libre essentiellement prismatique.

2. Applicateur selon la revendication 1, **caractérisé en ce que** l'évidement (6) et le poinçon (3) présentent des profils essentiellement symétriques (7a, 7b), qui présentent une courbure concave aussi bien dans le sens de déplacement du poinçon (3) que transversalement à celui-ci.

3. Applicateur selon la revendication 2, **caractérisé en ce que** la courbure concave s'étendant transversalement au sens de déplacement du poinçon (3) présente sur ses bords des sections (7c) s'étendant de façon essentiellement perpendiculaire au sens de déplacement du poinçon.

4. Applicateur selon l'une des revendications 1 à 3, **caractérisé en ce que** la matrice (2) présente pour l'essentiel la forme d'un crochet constitué d'une branche longue (4) et d'une branche courte (5), l'évidement (6) se trouvant dans la branche courte (5), et **en ce que** le poinçon (3) est guidé le long du côté de la branche longue (4) orienté vers la branche courte (5).

5. Applicateur selon l'une des revendications 1 à 4, **caractérisé en ce que** le poinçon (3) et la matrice (2) peuvent être insérés dans un dispositif d'entraînement et de chauffage (12).

6. Applicateur selon l'une des revendications 1 à 5, **caractérisé en ce que** l'évidement (6) de la matrice (2) est traversé par un canal (13) s'étendant transversalement au sens de déplacement du poinçon (3), dans lequel un magasin d'alimentation (14) peut être introduit, lequel magasin d'alimentation présente les uns à côté des autres plusieurs logements (15) pour rajouts de cheveux (8) correspondant à la forme de l'évidement (6).

7. Applicateur selon les revendications 5 et 6, **caractérisé en ce que** le dispositif d'entraînement et de chauffage (12) présente pour le magasin d'alimentation (14) un dispositif d'avance intermittente.
